(19) Europäisches Patentamt
European Patent Office
Office européen des brevets

(11) **EP 3 353 031 B1**

(12) **FASCICULE DE BREVET EUROPEEN**

(45) Date de publication et mention
de la délivrance du brevet:
**22.06.2022 Bulletin 2022/25**

(21) Numéro de dépôt: **16785200.3**

(22) Date de dépôt: **22.09.2016**

(51) Classification Internationale des Brevets (IPC):
**B60W 50/00** *(2006.01)*

(52) Classification Coopérative des Brevets (CPC):
**B60W 50/0098;** B60W 30/095; B60W 2050/0088;
B60W 2510/202; B60W 2520/10; B60W 2520/125;
B60W 2540/10; B60W 2540/12; B60W 2540/16;
B60W 2540/221

(86) Numéro de dépôt international:
**PCT/FR2016/052395**

(87) Numéro de publication internationale:
**WO 2017/051120 (30.03.2017 Gazette 2017/13)**

(54) **DISPOSITIF D'AIDE A LA CONDUITE POUR ESTIMATION DU DANGER D'UNE SITUATION**

FAHRASSISTENZVORRICHTUNG ZUR ABSCHÄTZUNG DER GEFAHR EINER SITUATION

DRIVING ASSISTANCE DEVICE FOR ESTIMATING THE DANGER OF A SITUATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.09.2015 FR 1559022**

(43) Date de publication de la demande:
**01.08.2018 Bulletin 2018/31**

(73) Titulaire: **Renault s.a.s**
**92100 Boulogne Billancourt (FR)**

(72) Inventeurs:
• **MINOIU-ENACHE, Nicoleta**
**78000 Versailles (FR)**

• **CHIRCA, Mihai**
**75015 Paris (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
JP-A- 2007 279 818      JP-A- 2008 120 288
JP-A- 2008 238 831      US-A1- 2003 236 605

**Description**

DOMAINE DE L'INVENTION

L'invention concerne le domaine des outils numériques d'assistance à la conduite. Elle concerne plus précisément un dispositif d'évaluation d'un danger d'une situation dans laquelle un véhicule est impliqué en fonction de son environnement.

CONTEXTE DE L'INVENTION

Les véhicules allant sur la voie publique disposent d'un nombre grandissant d'outils numériques d'assistance à la conduite, visant notamment le confort du conducteur mais aussi l'accroissement de la sécurité du véhicule, des passagers et des autres usagers de la voie publique.

Une famille d'outils numériques d'assistance à la conduite concerne le freinage autonome d'urgence, ou « *Autonomous Emergency Braking* » (AEB) en langue anglaise, et notamment dans sa version adaptée à la détection de piétons déclenchant le freinage : AEBP, pour « *Autonomous Emergency Braking - Pedestrian* ».

Ces outils se basent sur un signal d'entrée issu d'un capteur telle une caméra orientée vers l'avant du véhicule. Le flux vidéo est analysé en temps réel afin de détecter des caractéristiques physionomiques d'un être humain, et si un être humain est détecté, un freinage d'urgence peut être déclenché, sans intervention du conducteur du véhicule. Un mécanisme d'analyse peut être mis en place afin de discriminer des situations à risque et des situations normales ; par exemple, un piéton situé sur le trottoir représente a priori une situation normale ne devant pas déclencher un freinage d'urgence. Si par contre, un piéton, même situé sur le trottoir, poursuit une trajectoire pouvant l'amener sur la route du véhicule, un freinage d'urgence peut s'avérer nécessaire.

Aussi, des algorithmes sont mis en œuvre permettant la prédiction du comportement et des réactions des piétons détectés sur le flux vidéo. Les solutions actuelles pour concevoir ces algorithmes sont encore très imparfaites et ne permettent pas le déploiement des outils de type AEB.

L'analyse d'une situation complexe, ainsi que le très grand nombre de situations dans lesquelles un véhicule peut être engagé et qui doivent être donc prises en compte par les algorithmes sont des difficultés majeures.

Certaines solutions prennent en compte une multiplicité de capteurs (plusieurs caméras, télémètre laser, radar, etc.). Cela permet d'augmenter la connaissance de la situation, mais ne résout en rien les difficultés inhérentes à la complexité des situations et à leurs extrêmes variétés.

La demande de brevet indienne portant le numéro de demande 551/MUM/2011 et intitulée « *Pedestrian detection and tracking system* » décrit un système pour la détection de piétons (êtres humains) et d'obstacles basé non seulement sur la détection mais également sur le suivi (« tracking » en anglais) des objets (piétons ou obstacles) détectés. Toutefois cette solution ne sort pas de l'écueil précédemment décrit de devoir analyser des situations complexes et variées.

Le brevet US8848978 intitulé « *Fast obstacle Détection* » décrit un algorithme basé sur l'hypothèse que tout ce qui n'est pas une route est un obstacle. Plus précisément, en faisant l'hypothèse d'une route plane et en connaissant la position de la caméra dans le véhicule, il est possible de déduire les pixels des images du flux vidéo qui correspondent à un objet ayant une certaine hauteur. Cette solution a toutefois pour limite l'absence de classification des objets détectés et d'analyse sémantique de la situation capturée et/ou de prédiction de la dynamique des objets détectés.

La demande de brevet chinois CN102043953, intitulée *"Real-time-robust pedestrian detection method aiming at specific scene"* concerne un domaine connexe de la détection de piétons dans un flux vidéo issu de caméras de surveillance. La méthode décrite se base sur le fait que la scène est connue et fixe, et permet ainsi de hautes performances dans la détection des piétons. Cette méthode n'est toutefois pas adaptable directement au contexte d'une caméra embarquée sur un véhicule et à la détection sur une scène évoluant continument du fait du mouvement du véhicule et de la caméra.

Un article publié sur un site web du constructeur d'automobiles BMW est disponible à l'adresse URL : http://www.bmwblog.com/2009/04/22/bmw-car-2-x-communication-improves-pedestrian-safety/

Cet article décrit l'apport de communications sans fil entre véhicules (« car to car communications ») pour le partage d'information. Ainsi, les analyses des flux vidéo d'une première voiture peuvent être partagées vers d'autres véhicules voisins. L'article mentionne l'exemple d'un piéton masqué par un premier véhicule qui, sans communication, apparaitrait dans le champ de vision d'un second véhicule trop tardivement pour permettre une réaction. Le partage d'information permet de tirer profit de la détection de ce piéton par le premier véhicule et d'anticiper sur la situation de danger.

US 2003/0236605 A1 décrit un dispositif de détection d'objets dans lequel des objets sont détectés et des réactions du conducteur sont analysées. Ces deux flux d'informations sont mis en correspondance. Le résultat de cette mise en correspondance est utilisé d'affiner le mécanisme de détection d'obstacles.

Toutefois les réseaux de communication véhicule à véhicule ne sont pas encore véritablement déployés. En outre, toute une problématique de confiance en une information fournie par un véhicule tiers reste à étudier.

RESUME DE L'INVENTION

Le but de la présente invention est de fournir une solution palliant au moins partiellement les inconvénients précités. Plus particulièrement, l'invention vise à fournir un procédé et un dispositif permettant la mise en correspondance d'une analyse sémantique automatique d'une situation et des réactions du conducteur et du véhicule, via un mécanisme d'apprentissage basé sur une mesure de danger.

A cette fin, la présente invention propose un dispositif pour l'aide à la conduite (DAC) sur une voie routière d'un véhicule conduit par un conducteur, ledit dispositif comportant :

- des moyens pour recevoir des flux de signaux d'un ensemble de capteurs, un premier sous-ensemble de capteurs fournissant une vue de la situation englobant ledit véhicule,
- un module d'analyse sémantique adapté pour la détection d'objets au sein de ladite vue et pour la classification desdits objets détectés ;
- un module d'analyse des réactions dudit conducteur et dudit véhicule, à partir d'un deuxième sous-ensemble de capteurs ;
- un module d'interprétation adapté pour la mise en correspondance par un mécanisme d'apprentissage entre les objets détectés et classifiés par ledit module d'analyse sémantique et des données fournies par ledit module d'analyse des réactions pour fournir une estimation de danger pour ladite situation ;
- et un module d'interprétation des conséquences adapté pour fournir une mesure de danger basé sur des signaux issus d'un troisième sous-ensemble de capteurs ; ladite mesure de danger étant comparée à ladite estimation de danger pour fournir un signal paramétrant ledit mécanisme d'apprentissage dudit module d'interprétation.

Suivant des modes de réalisation préférés, l'invention comprend une ou plusieurs des caractéristiques suivantes qui peuvent être utilisées séparément ou en combinaison partielle entre elles ou en combinaison totale entre elles :

- le dispositif comporte une interface pour alerter ledit conducteur lorsqu'une estimation de danger correspond à des critères prédéfinis ;
- ledit mécanisme d'apprentissage est un mécanisme semi-supervisé.
- ledit module d'analyse sémantique utilise ladite estimation du danger pour paramétrer son fonctionnement.

Un autre aspect de l'invention concerne un système comportant un dispositif de freinage d'urgence et un dispositif d'aide à la conduite tel que précédemment décrit, dans lequel la décision dudit dispositif d'aide de freinage d'urgence est modulée par ladite estimation de danger.

Un autre aspect de l'invention concerne un procédé pour l'aide à la conduite sur une voie routière d'un véhicule conduit par un conducteur, comportant :

- une étape de réception des flux de signaux d'un ensemble de capteurs, un premier sous-ensemble de capteurs fournissant une vue de la situation englobant ledit véhicule ;

- une étape d'analyse sémantique adaptée pour la détection d'objets au sein de ladite vue et pour la classification desdits objets détectés;

- une étape d'analyse des réactions dudit conducteur et dudit véhicule, à partir d'un deuxième sous-ensemble de capteurs ;

- une étape d'interprétation adaptée pour la mise en correspondance par un mécanisme d'apprentissage entre les objets détectés et classifiés par ladite étape d'analyse sémantique et des données fournis par ladite étape d'analyse des réactions pour fournir une estimation de danger pour ladite situation ;

- et une étape d'interprétation des conséquences adapté pour fournir une mesure de danger basée sur des signaux issus d'un troisième sous-ensemble de capteurs ; ladite mesure de danger étant comparée à ladite estimation de danger pour fournir un signal paramétrant ledit mécanisme d'apprentissage mis en œuvre par ladite étape d'interprétation.

Suivant des modes de réalisation préférés, l'invention comprend une ou plusieurs des caractéristiques suivantes qui peuvent être utilisées séparément ou en combinaison partielle entre elles ou en combinaison totale entre elles :

- le procédé comporte une étape pour alerter ledit conducteur lorsqu'une estimation de danger correspond à des critères prédéfinis ;
- ledit mécanisme d'apprentissage est un mécanisme semi-supervisé ;
- ladite étape d'analyse sémantique utilise ladite estimation du danger pour paramétrer son fonctionnement ;

Un autre aspect de l'invention concerne un programme d'ordinateur comportant des instructions exécutables pour mettre en œuvre le procédé tel que précédemment décrit.

D'autres caractéristiques et avantages de l'invention apparaîtront à la lecture de la description qui suit d'un mode de réalisation préféré de l'invention, donnée à titre d'exemple et en référence aux dessins annexés.

## BREVE DESCRIPTION DES DESSINS

La figure 1 représente schématiquement un exemple d'architecture fonctionnelle d'un dispositif d'aide à la conduite selon un mode de réalisation de l'invention.

La figure 2 représente schématiquement un exemple d'architecture fonctionnelle selon un mode de réalisation de l'invention d'un module d'analyse sémantique.

Les figures 3a et 3b illustrent schématiquement une problématique liée à la classification.

## DESCRIPTION DETAILLEE DE L'INVENTION

Comme il sera vu ultérieurement, le dispositif pour l'aide à la conduite selon l'invention peut être utilisé de façon autonome, ou, par exemple, de façon complémentaire à un outil numérique de freinage d'urgence. Différents agencements sont alors possibles qui seront explicités plus bas.

Le dispositif d'aide à la conduite selon l'invention peut en effet fournir une estimation de danger pour la situation dans laquelle est englobé le véhicule, et cette estimation peut être utilisée de différentes façons au sein de l'architecture de commande d'un véhicule se déplaçant sur une voie routière.

Ce dispositif d'aide à la conduite permet de mettre en correspondance une analyse sémantique de la situation et les réactions du conducteur et du véhicule, et ainsi tirer profit de ces dernières pour améliorer, par apprentissage, cette mise en correspondance. Ainsi, l'invention permet de rapprocher la puissance de calcul des dispositifs numériques avec l'analyse intuitive de l'être humain afin de bénéficier des deux avantages.

Le dispositif selon l'invention permet donc d'aider un conducteur à conduire un véhicule sur une voie routière : rue en milieu urbain ou péri-urbain, route en milieu non urbain, mais également parkings publics ou privés, etc.

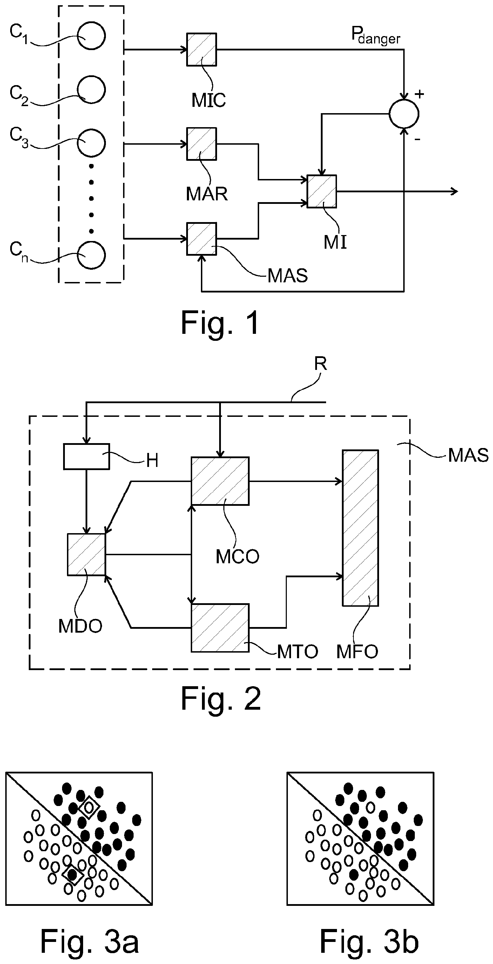

La figure 1 illustre le dispositif d'aide à la conduite selon une mise en œuvre de l'invention. Ce dispositif d'aide à la conduite (DAC) possède des moyens pour recevoir des flux de signaux d'un ensemble de capteurs, C1, C2, C3... Cn.

Afin de permettre un bon fonctionnement de l'invention, cet ensemble doit comporter une pluralité de capteurs de natures variées, permettant à la fois de fournir une vue de la situation du véhicule, mais aussi de fournir les réactions du véhicule et du conducteur dans ces situations (afin notamment d'en permettre la mise en correspondance).

Cet ensemble de capteurs peut être considéré comme comprenant trois sous-ensembles, pouvant éventuellement comporter des recouvrements.

Un premier sous-ensemble permet de fournir une vue de la situation englobant le véhicule pour un module d'analyse sémantique MAS.

Un deuxième sous-ensemble de capteurs est utilisé un module d'analyse des réactions, MAR, afin de permettre l'analyse des réactions du véhicule et de son conducteur.

Un troisième sous-ensemble de capteurs fournit des signaux au module d'interprétation des conséquences, MIC.

Ces capteurs C1, C2, C3... Cn peuvent être de différentes natures. Certains, voire la plupart, sont généralement disponibles dans les véhicules du marché. Il peut toutefois être intéressant ou important d'en ajouter certains pour mettre en œuvre l'invention dans certains de ses modes de réalisation.

Certains capteurs appartiennent typiquement au premier sous-ensemble et permettent de construire une vue de la situation : caméras vidéos (avant, arrière), télémètre, radar, système à ultra-sons, etc.

Certains capteurs permettent de fournir des signaux relatifs à la réaction du conducteur et/ou du véhicule (et peuvent appartenir au deuxième et/ou troisième sous-ensembles) : capteur d'angle de braquage, gyroscope mesurant la vitesse de lacet et les accélérations longitudinale et transversale, mesure de la vitesse de rotation des roues (permettant d'estimer la vitesse de déplacement du véhicule), capteur du couple de braquage (permettant d'estimer le couple provoqué par le conducteur pour braquer), ordre d'utilisation des pédales de frein et d'accélération, taux d'enfoncement des différentes pédales, position du levier de vitesse, etc.

Certains capteurs concernent spécifiquement la réaction du conducteur : capteur de pression sur le volant, caméra capturant le visage et les yeux du conducteur, utilisation de l'avertisseur sonore (klaxon), etc.

En outre, des capteurs peuvent concerner les signaux transmis sur le bus CAN (pour « Controller Area Network » en anglais) liant les dispositifs numériques internes au véhicule : signal de déclenchement de l'airbag, mesures d'accélération longitudinales et transversales, vitesse de rotation du volant, variation de la vitesse du véhicule en instantanée ou sur un horizon de temps de quelques minutes, etc.

Comme il sera vu par la suite, l'invention n'est pas particulièrement liée à un type de capteurs en particulier, mais fonctionne de façon efficace si un grand nombre de capteurs sont disponibles afin de fournir des vues complètes et les plus correctes possibles de la situation et des réactions du véhicule et du conducteur. L'utilisation de ces différents sous-ensembles de capteurs sera davantage explicitée par la suite.

Le dispositif d'aide à la conduite DAC selon l'invention comprend quatre modules principaux, ainsi qu'un arrangement particulier permettant l'apprentissage par une boucle de contre-réaction (ou rétroaction). Ces modules doivent être compris comme des modules fonctionnels, et peuvent donc être mis en œuvre de différentes façons en pratique : il peut s'agir de modules logiciels indépendants d'une même application, de plusieurs applications distinctes, d'une même application dans laquelle sont mêlées les caractéristiques techniques (code informatique) correspondant aux modules fonctionnels, etc.

Un premier module est le module d'analyse sémantique MAS. Ce module permet la détection d'objets au sein de la vue de la situation fournie par les capteurs du premier sous-ensemble, et la classification de ces objets.

La figure 2 schématise une mise en œuvre possible pour une architecture fonctionnelle d'un tel module d'analyse sémantique MAS.

Le but de ce module est d'analyser la scène en temps réel, c'est-à-dire de détecter les objets qui, par leur présence ou par leur dynamique, risquent de se retrouver sur la trajectoire du véhicule, et qui donc représentent un danger potentiel.

La détection en temps réel est une contrainte forte, compte tenu du problème général de l'invention qui porte sur la sécurité des véhicules, des passagers et des piétons. Il est donc primordial de pouvoir déclencher des réactions automatiques également en temps réel. Pour cette raison, il ne faut pas extraire l'ensemble des objets de la scène mais uniquement ceux qui peuvent interagir avec le véhicule.

La détection des piétons est un cas particulier de la détection d'objet. Dans la terminologie habituelle de l'homme du métier, l'expression « détection d'objets » est couramment utilisée, mais celle-ci recouvre généralement plusieurs phases distinctes :

- Une phase de détection des objets proprement dite, correspondant à un module fonctionnel de détection d'objets MDO
- Une phase de classification des objets, correspondant à un module fonctionnel de classification des objets MCO ;
- Une phase de suivi des objets (ou « *tracking* » en langue anglaise), correspondant à un module fonctionnel de suivi des objets MTO

Le module de détection d'objets MDO a pour but de détecter les objets, ou selon un mode de réalisation de l'invention, des motifs (ou « patterns »). Plusieurs mises en œuvre sont pour cela possibles, basées sur différentes techniques de l'état de la technique :

- Les techniques holistiques, qui utilisent une fenêtre de recherche locale et une mise en correspondance est effectuée par une fonction de ressemblance ;
- Les techniques basées sur les parties : les objets sont des collections de sous-objets, plus simples ou élémentaires, et détectés séparément, et liés par des articulations ;
- Les techniques dites « *patch-based detection* » dans lesquelles les caractéristiques locales sont mises en correspondance avec d'autres caractéristiques préalablement apprises et stockées dans une base de données, qui joue ainsi un rôle de dictionnaire.

L'invention peut mettre en œuvre chacune de ces familles de techniques, ou d'autres techniques encore connues ou à définir. L'invention est en effet indépendante de l'algorithme de détection d'objets mais se base uniquement sur le résultat d'un module fonctionnel mettant en œuvre un tel algorithme.

Pour ce qui est de la représentation mathématique des caractéristiques, on peut distinguer deux méthodes principales : celles appelées « minimalistes (en général en langue anglaise par la dénomination « *sparse local représentations* ») et celles appelées « denses » (« *dense représentations of image régions* » en langue anglaise).

Pour le premier type de représentation, on peut utiliser des techniques de détection utilisant des détecteurs de points (« *point detector* »), des détecteurs de parties (« *part or limb detectors* ») ...

Pour le second type de représentation, on peut par exemple utiliser comme techniques de détection : des détecteurs de régions (par exemple, « *Régions and Fragments based on Image intensity* » en langue anglaise), des détecteurs de gradient ou de contours (« *Edge and gradient based detector* » en langue anglaise), des détecteurs à ondelettes (« *wavelet based detectors* » en langue anglaise), etc.

De telles techniques de détection abordées et détaillées dans les travaux suivants :

- T. Lindeberg (2008/2009). "Scale-space". Encyclopedia of Computer Science and Engineering (Benjamin Wah, ed), John Wiley and Sons IV: 2495-2504.
- Canny, J. (1986). "A Computational Approach To Edge Detection". IEEE Trans. Pattern Analysis and Machine Intelligence 8 (6)
- J.-L. Starck, F. Murtagh, M. Fadili, Sparse Image and Signal Processing, Cambridge University Press, 2010.
- On the Role of Sparse and Redundant Representations in Image Processing", Michael Elad, Senior Member, IEEE, Mario A.T. Figueiredo, Senior Member, IEEE, and Yi Ma, Senior Member, IEEE
- Yining Deng ; Hewlett-Packard Co., Palo Alto, CA, USA ; Manjunath, B.S. ; Kenney, C. ; Moore, M.S., "An efficient color representation for image retrieval", Image Processing, IEEE Transactions on
- Tai Sing Lee ; Dept. of Comput. Sci., "Image representation using 2D Gabor wavelets", Pattern Analysis and Machine Intelligence, IEEE Transactions on (Volume:18 , Issue: 10)

Les caractéristiques ainsi extraites peuvent être formalisées sous forme de motifs transmis aux deux autres modules : le module de classification MCO et le module de suivi MTO.

Différentes mises en œuvre sont là aussi possibles, mais pour des raisons de performance, il peut être choisi de déployer chacun de ces modules sur des fils d'exécution (ou « *thread* ») tournant en parallèle.

Le module de suivi d'objets MTO a pour rôle de suivre en continu les motifs extraits par le module de détection d'objets MDO et de calculer la trajectoire actuelle et les infléchissements de trajectoire laissant supposer un changement imminent de trajectoire.

Le module de classification d'objets MCO a pour rôle de déterminer une classe d'objet pour les objets détectés et d'extraire ses caractéristiques. Cette classification peut se faire par rapport à une base apprise (formant un vocabulaire). Comme il sera vu ultérieurement, des mécanismes d'apprentissage permettent d'améliorer tant l'algorithme de classification, par paramétrage, que la base de vocabulaire.

Un quatrième module fonctionnel au sein du module d'analyse sémantique MAS est le module de fusion des propriétés des objets MFO. Ce module a pour but d'agréger les données issues du module de suivi d'objets MTO et du module de classification des objets MCO. Il peut en déduire des informations de plus haut niveau sémantique comme :

- Le type d'environnement et de route : rue, autoroute...
- Les conditions météorologiques, le niveau de visibilité, l'état de la route,
- Les panneaux de signalisation,
- Les objets présents : dimensions, positions, trajectoires, type d'objets (si la classification a abouti).

Le dispositif d'aide à la conduite DAC selon l'invention comporte également un module d'analyse des réactions MAR, à la fois du conducteur et du véhicule. Ces deux types de réactions peuvent être traités de façon séparée par le module puis fusionnés pour donner une information globale sur les réactions de la paire conducteur/véhicule, qui est fournie au module d'interprétation MI.

Ce module tire profit des signaux fournis par les différents capteurs afin d'en filtrer une information pertinente, et de la mettre en forme pour le traitement par le module d'interprétation MI.

La réaction du conducteur peut être mesurée par son activité sur le volant (angle de braquage, vitesse de braquage), mais aussi par son activité sur les pédales d'accélération et de frein.

Selon un mode de réalisation de l'invention, une caméra de surveillance peut être installée dans le véhicule et capturer les réactions du conducteur (et éventuellement des passagers). La réaction peut être mesurée par le taux d'ouverture des yeux et/ou de la bouche, par exemple.

En outre, des capteurs de pression localisés dans le volant peuvent permettre de mesurer la pression exercée par le conducteur sur le volant. L'intensité de la pression, ou sa variation dans le temps, peuvent permettre de fournir un indicateur supplémentaire.

Le module d'analyse des réactions MAR peut ainsi fournir au module d'interprétation MI des informations variées. On peut par exemple citer, de façon non exhaustive : angle de braquage, vitesse de braquage, enfoncement de la pédale d'accélération, enfoncement de la pédale de frein, utilisation du klaxon, position du levier de vitesse, taux d'ouverture des yeux, taux d'ouverture de la bouche...

En sus des réactions du conducteur, le module d'analyse des réactions MAR peut capturer et fournir des informations relatives aux réactions du véhicule.

Le véhicule change sa dynamique (vitesse, direction...) en fonction des actions du conducteur, mais également en fonction des conditions de la surface de circulation.

Comme informations fournies par le module d'analyse des réactions MAR et relatives aux réactions du véhicule, on peut citer de façon non exhaustive : l'accélération/décélération du véhicule, la vitesse de rotation du véhicule...

Toutes ces informations peuvent être fournies directement via le bus CAN du véhicule ou être issus de capteurs supplémentaires, comme par exemple la caméra de surveillance, capteurs qui peuvent être spécifiques à la mise en œuvre de l'invention, ou mutualisés avec d'autres applications. Le module d'analyse des réactions MAR peut effectuer des mises au format afin de transformer des données brutes issues des capteurs et/ou du bus CAN en données exploitables par le module d'interprétation MI.

Le dispositif d'aide à la conduite DAC selon l'invention comporte en outre un module d'interprétation des conséquences MIC.

L'objectif de ce module est de déterminer une probabilité de danger $P_{danger}$ en se basant sur des mesures de capteurs ou différents signaux qui, préférentiellement, sont disponibles sur le bus CAN du véhicule.

Cette évaluation $P_{danger}$, par convention, prend une valeur proche de zéro dans une situation normale d'absence de danger, et une valeur proche de 1 lorsqu'un danger très important est détecté (voire lors de la survenance d'un accident).

Cette évaluation peut se baser sur un ensemble de données d'entrée et se calculer à partir de différentes heuristiques.

Selon un mode de réalisation de ce module d'interprétation des conséquences MIC, les données d'entrée comprennent :

- la décélération du véhicule $d_y$, saturée à $Seuil_d$ (les valeurs d'accélération ne sont pas considérées et les valeurs $d_y$ et $Seuil_d$ sont considérées comme positives) ;
- le profil de vitesse v après une forte décélération. La mesure peut être effectuée pendant une fenêtre temporelle, par exemple une minute.
- le déclenchement de l'air bag ;
- l'enfoncement de la pédale de frein ;
- la vitesse de braquage du véhicule $v_{delta}$ saturé à $seuil_v$ pour des valeurs positives et à $-seuil_v$ pour des valeurs négatives (avec $seuil_v$ positif).

L'évaluation du danger $P_{danger}$ peut alors être déterminée par les heuristiques suivantes :

$$p_{danger} = \begin{cases} 1 & si\ p_{danger\_somme} > 1 \\ \frac{1}{2} \cdot \left( p_{danger\_decel} + p_{danger\_volant} \right) & si\ p_{danger\_somme} < 1 \end{cases}$$

Avec

$$p_{danger\_somme} = (p_{danger\_decel} == 1) + (p_{danger\_volant} == 1) + p_{danger\_vitesse} + p_{danger\_airbag}$$

$$+ p_{danger\_kickdown}$$

$$P_{danger\_volant} = 1 - (seuil_v - abs(v_{delta})) / seuil_v$$

$$P_{danger\_decel} = 1 - (seuil_d - d_y) / seuil_d$$

$P_{danger\ vitesse}$ = 1 si le véhicule s'est arrêté avec une forte décélération et est resté
$P_{danger\ airbag}$ = 1 si l'air bag s'est déclenché ; 0 sinon ;
$P_{danger\_kickdown}$ = 1 si le conducteur a enfoncé complétement la pédale de frein, 0 sinon.

Le « cœur » du dispositif d'aide à la conduite DAC est formé par le module d'interprétation MI qui a pour entrées les informations fournies à la fois par le module d'analyse des réactions MAR et par le module d'analyse sémantique MAS. Son but est de mettre en correspondance les informations issues de ces deux sources, afin de fournir une estimation de danger.

En outre, une boucle de rétroaction peut être mise en œuvre entre ce module d'interprétation MI et le module d'analyse sémantique MAS. En effet, les conclusions issues de la fusion et mise en correspondance de ces informations entre les deux sources (objets détectés par le module d'analyse sémantique et réactions issues du module d'analyse des réactions) peuvent permettre de paramétrer plus finement et/ou de corriger certains paramètres de l'analyse sémantique. Dans le mode de réalisation illustré par la figure 2, cette « rétroaction » R peut influer les paramètres à la fois de l'algorithme mis en œuvre par le module de classification des objets MCO, et une base de données d'hypothèses H sur laquelle se base le module de détection des objets MDO. Bien entendu, d'autres possibilités peuvent être mises en œuvre pour réaliser cette boucle de rétroaction.

Cette boucle de rétroaction peut être utile, par exemple, dans le cas où l'analyse sémantique n'a pas pu détecter un danger, mais que le conducteur a correctement réagi à ce danger. Dans ce cas, la réaction du conducteur peut être utilisée pour revenir sur l'historique des images capturées et analysées par le module d'analyse sémantique MAS afin d'adapter le paramétrage pour qu'une nouvelle occurrence d'une situation similaire provoque une détection automatique de situation dangereuse.

Le module d'interprétation MI met en œuvre un mécanisme d'apprentissage. Plusieurs types de mécanismes d'apprentissage sont possibles :

- un apprentissage supervisé réalisé « hors ligne » (ou analyse discriminante) : un opérateur humain fournit un modèle de classement et le module d'interprétation MI apprend à classer les situations en fonction de ce modèle et d'étiquettes associées par un « expert » à ces situations. Ce processus peut être constitué de deux phases : (1) une phase d'apprentissage proprement dite, dans laquelle le module MI détermine le modèle des situations dangereuses étiquetées, et (2) une phase de prédiction d'étiquette, durant laquelle le module MI valide le modèle avec un jeu de données non utilisé pendant la première phase d'apprentissage.
- Un apprentissage non supervisé (ou « clustering »), également réalisé hors ligne. Le module d'interprétation MI ne dispose pas d'étiquettes, de numéro de classes ou d'information sur leur nature au démarrage du processus. Le calcul de la ressemblance entre données pour la classification sous une même étiquette se fait à l'aide d'une fonction de distance, et de façon itérative. A la fin du processus, c'est à l'utilisateur de donner, éventuellement, une signification aux classes trouvées.
- Une combinaison entre méthodes supervisée et non-supervisée.

Selon un mode de réalisation de l'invention, une première étape d'apprentissage est réalisée hors-ligne. On dispose pour ce faire d'une base de données qui contient un échantillon de situations clairement identifiées, ainsi que d'une seconde base de données contenant un échantillon de situations difficilement étiquetables (qu'on appelle « à étiquettes incertaines »). En outre, l'exploitation continue de l'algorithme mis en œuvre par le module MI permet nécessairement de relever des situations dangereuses non étiquetées, formant un troisième échantillon.

Dans un mode de réalisation de l'invention, l'algorithme est un algorithme d'apprentissage semi-supervisé. Comme dans un apprentissage supervisé, on veut déterminer l'appartenance à une classe de danger ou à une classe de probabilité de danger. Il s'agit donc d'extraire une règle de décision ou de régression, tout en utilisant des situations étiquetées, non-étiquetées ou partiellement étiquetées.

En fonctionnement réel (c'est-à-dire en dehors de la phase « hors ligne » d'apprentissage initial), il survient nécessairement des situations qui n'ont pas été apprises, et pour lesquelles le mécanisme précédemment décrit ne serait pas à même de détecter le danger.

Les mécanismes d'apprentissage prennent alors le relais : d'une façon générale, il s'agit de comparer l'estimation de danger ainsi déterminée par le module d'interprétation MI, avec une mesure de danger $P_{danger}$ déterminée par le module d'interprétation des réactions. Ce mécanisme permet de détecter une mauvaise classification (c'est-à-dire un mauvais étiquetage) d'une situation, et d'influer sur l'apprentissage afin d'améliorer la classification pour les situations ultérieures.

Parmi les méthodes semi-supervisées existantes et pouvant être utilisées pour mettre en œuvre le module d'interprétation MI selon l'invention, on peut mentionner : l'auto-apprentissage, le co-apprentissage, les Séparateurs à vaste marge (SVM) transductif, les S3VM (Séparateurs Semi Supervisé à Vaste Marge, les techniques de type « expectation maximization » (EM), etc.

L'invention n'est donc pas dépendante d'une technique particulière d'apprentissage semi-supervisée, mais est susceptible d'utiliser un grand nombre de techniques différentes afin de permettre la détermination d'une estimation de danger en fonction d'une mise en correspondance entre les objets détectés et classifiés par le module d'analyse sémantique et des données fournies par le module d'analyse des réactions MAR.

Un des problèmes qui peut se poser avec les méthodes d'apprentissage est le « sur apprentissage » (ou « overfitting » en langue anglaise). Comme la base de données des échantillons peut contenir des données erronées ou bruitées, si à la fin de l'apprentissage, le modèle caractérise fidèlement toutes les données d'entrée, il y a une forte probabilité qu'il modélise également le bruit, ainsi qu'illustré sur la figure 3a. La figure 3b illustre la situation où les données ont bien été classées et où le bruit a été filtré. Dans la plupart des cas, ce phénomène est écarté par l'utilisation d'une base de test, mais on ne peut pas garantir que, dans le choix de la base de test, le taux des données bruitées soit négligeable.

A la fin de l'apprentissage hors ligne, une fusion est réalisée, en quelque sorte, entre la réaction du conducteur et du véhicule, et l'analyse sémantique de la situation, dans le but d'estimer le danger de la situation en question.

Dans une seconde étape, l'apprentissage en ligne est réalisé grâce au rebouclage continu avec la différence entre le danger estimé par le module d'interprétation MI et le danger mesuré par le module d'interprétation des conséquences MIC.

Les paramètres de calibration de la méthode d'apprentissage choisie peuvent être donc modifiés continuellement pour minimiser cette erreur et donner des bonnes estimations de danger, même lorsque le conducteur n'a pas la réaction appropriée. L'hypothèse sur laquelle repose l'invention est que le conducteur a la réaction appropriée dans la majeure partie des situations, et cette hypothèse permet de « corriger » ou d'alerter le conducteur dans les cas, exceptionnels, contraires.

Comme il a été évoqué précédemment, le dispositif d'aide à la conduite DAC selon l'invention peut collaborer de différentes façons avec un outil numérique d'assistance à la conduite, notamment un système de freinage d'urgence AEB.

Par exemple, l'estimation du danger fournie par le dispositif d'aide à la conduite DAC peut moduler le résultat issu du dispositif de freinage d'urgence AEB. En effet, la détection d'un danger peut être intéressante pour renforcer le freinage d'urgence, par exemple.

Il peut également être possible d'asservir le déclenchement du système de freinage d'urgence AEB à l'estimation d'une situation de danger par le dispositif d'aide à la conduite DAC.

Il peut être intéressant aussi pour développer de nouveaux paramétrages du système de freinage d'urgence en utilisant les données issues du dispositif d'aide à la conduite DAC. Ce mécanisme peut être mis en place hors-ligne.

Comme évoqué plus haut, également, le dispositif d'aide à la conduite DAC peut être utilisé comme simple avertisseur pour le conducteur. En cas de détection d'un danger important, un signal sonore et/ou lumineux peut être déclenché pour alerter le conducteur. Pour ce faire, le dispositif DAC comporte une interface pour alerter le conducteur lorsqu'une estimation de danger correspond à des critères prédéfinis. Cette interface peut lui permettre de communiquer avec le tableau de bord, via notamment le bus CAN. Les critères prédéfinis peuvent correspondre à un seuil au-delà duquel l'alerte doit être déclenchée. Plusieurs seuils peuvent être définis, chacun correspondant à un niveau d'alerte.

## Revendications

**1.** Dispositif pour l'aide à la conduite (DAC) sur une voie routière d'un véhicule conduit par un conducteur, ledit dispositif comportant :

- des moyens pour recevoir des flux de signaux d'un ensemble de capteurs (C1, C2, C3... Cn), un premier sous-ensemble de capteurs fournissant une vue de la situation englobant ledit véhicule,
- un module d'analyse sémantique (MAS) adapté pour la détection d'objets au sein de ladite vue et pour la classification desdits objets détectés;
- un module d'analyse des réactions (MAR) dudit conducteur et dudit véhicule, à partir d'un deuxième sous-ensemble de capteurs ;
- un module d'interprétation (MI) adapté pour la mise en correspondance par un mécanisme d'apprentissage entre les objets détectés et classifiés par ledit module d'analyse sémantique (MAS) et des données fournies par ledit module d'analyse des réactions (MAR) pour fournir une estimation de danger pour ladite situation ;
- et un module d'interprétation des conséquences (MIC) adapté pour fournir une mesure de danger basé sur des signaux issus d'un troisième sous-ensemble de capteurs ; ladite mesure de danger étant comparée à ladite estimation de danger pour fournir un signal paramétrant ledit mécanisme d'apprentissage dudit module d'interprétation (MI).

**2.** Dispositif d'aide à la conduite (DAC) selon la revendication précédente, comportant une interface pour alerter ledit conducteur lorsqu'une estimation de danger correspond à des critères prédéfinis.

**3.** Dispositif d'aide à la conduite selon l'une des revendications 1 ou 2, dans lequel ledit mécanisme d'apprentissage est un mécanisme semi-supervisé.

**4.** Dispositif d'aide à la conduite selon l'une des revendications précédentes, dans lequel ledit module d'analyse sémantique utilise ladite estimation du danger pour paramétrer son fonctionnement.

**5.** Système comportant un dispositif de freinage d'urgence (AEB) et un dispositif d'aide à la conduite (DAC) selon les revendications précédentes, dans lequel la décision dudit dispositif d'aide de freinage d'urgence est modulée par ladite estimation de danger.

**6.** Procédé pour l'aide à la conduite sur une voie routière d'un véhicule conduit par un conducteur, comportant :

- Une étape de réception des flux de signaux d'un ensemble de capteurs (C1, C2, C3... Cn), un premier sous-ensemble de capteurs fournissant une vue de la situation englobant ledit véhicule,
- Une étape d'analyse sémantique adaptée pour la détection d'objets au sein de ladite vue et pour la classification desdits objets détectés ;
- une étape d'analyse des réactions dudit conducteur et dudit véhicule, à partir d'un deuxième sous-ensemble de capteurs ;
- une étape d'interprétation adaptée pour la mise en correspondance par un mécanisme d'apprentissage entre les objets détectés et classifiés par ladite étape d'analyse sémantique et des données fournis par ladite étape d'analyse des réactions pour fournir une estimation de danger pour ladite situation ;
- et une étape d'interprétation des conséquences adapté pour fournir une mesure de danger basée sur des signaux issus d'un troisième sous-ensemble de capteurs ; ladite mesure de danger étant comparée à ladite estimation de danger pour fournir un signal paramétrant ledit mécanisme d'apprentissage mis en œuvre par ladite étape d'interprétation.

**7.** Procédé d'aide à la conduite selon la revendication précédente, comportant une étape pour alerter ledit conducteur lorsqu'une estimation de danger correspond à des critères prédéfinis.

**8.** Procédé d'aide à la conduite selon l'une des revendications 6 ou 7, dans lequel ledit mécanisme d'apprentissage est un mécanisme semi-supervisé.

**9.** Procédé d'aide à la conduite selon l'une des revendications 6 à 8, dans lequel ladite étape d'analyse sémantique utilise ladite estimation du danger pour paramétrer son fonctionnement

**10.** Programme d'ordinateur comportant des instructions exécutables pour mettre en œuvre le procédé selon l'une des revendications 6 à 9.

**Patentansprüche**

**1.** Vorrichtung zur Fahrerassistenz (DAC) auf einer Straße eines von einem Fahrer gelenkten Fahrzeugs, wobei die Vorrichtung aufweist:

- Einrichtungen zum Empfang von Signalflüssen von einer Einheit von Sensoren (C1, C2, C3, ... Cn), wobei eine erste Untereinheit von Sensoren eine Ansicht der das Fahrzeug enthaltenden Situation liefert,
- ein semantisches Analysemodul (MAS), das zur Erfassung von Objekten innerhalb der Ansicht und zur Klassifizierung der erfassten Objekte geeignet ist;
- ein Analysemodul der Reaktionen (MAR) des Fahrers und des Fahrzeugs ausgehend von einer zweiten Untereinheit von Sensoren;
- ein Interpretationsmodul (MI), das für die Abstimmung zwischen den vom semantischen Analysemodul (MAS) erfassten und klassifizierten Objekten und vom Analysemodul der Reaktionen (MAR) gelieferten Daten durch einen Lernmechanismus geeignet ist, um eine Gefahrenabschätzung für die Situation zu liefern;
- und ein Interpretationsmodul der Konsequenzen (MIC), das geeignet ist, ein Gefahrenmaß basierend auf von einer dritten Untereinheit von Sensoren stammenden Signalen zu liefern; wobei das Gefahrenmaß mit der Gefahrenabschätzung verglichen wird, um ein Signal zu liefern, das den Lernmechanismus des Interpretationsmoduls (MI) parametriert.

**2.** Fahrerassistenzvorrichtung (DAC) nach dem vorhergehenden Anspruch, die eine Schnittstelle aufweist, um den Fahrer zu warnen, wenn eine Gefahrenabschätzung vordefinierten Kriterien entspricht.

3. Fahrerassistenzvorrichtung nach einem der Ansprüche 1 oder 2, wobei der Lernmechanismus ein halbüberwachter Mechanismus ist.

4. Fahrerassistenzvorrichtung nach einem der vorhergehenden Ansprüche, wobei das semantische Analysemodul die Abschätzung der Gefahr verwendet, um seinen Betrieb zu parametrieren.

5. System, das eine Notbremsvorrichtung (AEB) und eine Fahrerassistenzvorrichtung (DAC) nach den vorhergehenden Ansprüchen aufweist, wobei die Entscheidung der Notbremsassistenzvorrichtung durch die Gefahrenabschätzung moduliert wird.

6. Verfahren zur Fahrerassistenz auf einer Straße eines von einem Fahrer gelenkten Fahrzeugs, das aufweist:

   - einen Schritt des Empfangs der Signalflüsse von einer Einheit von Sensoren (C1, C2, C3, ... Cn), wobei eine erste Untereinheit von Sensoren eine Ansicht der das Fahrzeug enthaltenden Situation liefert,
   - einen semantischen Analyseschritt, der zur Erfassung von Objekten innerhalb der Ansicht und zur Klassifizierung der erfassten Objekte geeignet ist;
   - einen Analyseschritt der Reaktionen des Fahrers und des Fahrzeugs ausgehend von einer zweiten Untereinheit von Sensoren;
   - einen Interpretationsschritt, der für die Abstimmung zwischen den vom semantischen Analyseschritt erfassten und klassifizierten Objekten und vom Analyseschritt der Reaktionen gelieferten Daten durch einen Lernmechanismus geeignet ist, um eine Gefahrenabschätzung für die Situation zu liefern;
   - und einen Interpretationsschritt der Konsequenzen, der geeignet ist, ein Gefahrenmaß basierend auf von einer dritten Untereinheit von Sensoren stammenden Signalen zu liefern; wobei das Gefahrenmaß mit der Gefahrenabschätzung verglichen wird, um ein Signal zu liefern, das den von dem Interpretationsschritt angewendeten Lernmechanismus parametriert.

7. Fahrerassistenzverfahren nach dem vorhergehenden Anspruch, das einen Schritt aufweist, um den Fahrer zu warnen, wenn eine Gefahrenabschätzung vordefinierten Kriterien entspricht.

8. Fahrerassistenzverfahren nach einem der Ansprüche 6 oder 7, wobei der Lernmechanismus ein halbüberwachter Mechanismus ist.

9. Fahrerassistenzverfahren nach einem der Ansprüche 6 bis 8, wobei der semantische Analyseschritt die Abschätzung der Gefahr verwendet, um seinen Betrieb zu parametrieren.

10. Computerprogramm, das ausführbare Anweisungen aufweist, um das Verfahren nach einem der Ansprüche 6 bis 9 durchzuführen.

**Claims**

1. Driver assistance device (DAC) for assisting with driving, on a roadway, a vehicle driven by a driver, said device comprising:

   - means for receiving streams of signals from a set of sensors (C1, C2, C3... Cn), a first subset of sensors providing a view of the situation surrounding said vehicle;
   - a semantic analysis module (MAS) suited to detecting objects within said view and to classifying said detected objects;
   - a reaction analysis module (MAR) for analysing the reactions of said driver and of said vehicle, on the basis of a second subset of sensors;
   - an interpretation module (MI) suited to matching, by means of a learning mechanism, the objects detected and classified by said semantic analysis module (MAS) and data provided by said reaction analysis module (MAR) in order to provide a danger estimate for said situation;
   - and a consequence interpretation module (MIC) suited to providing a danger measurement based on signals originating from a third subset of sensors; said danger measurement being compared with said danger estimate in order to provide a signal configuring said learning mechanism of said interpretation module (MI).

2. Driver assistance device (DAC) according to the preceding claim, comprising an interface for alerting said driver when a danger estimate matches predefined criteria.

3. Driver assistance device according to one of Claims 1 and 2, wherein said learning mechanism is a semi-supervised mechanism.

4. Driver assistance device according to one of the preceding claims, wherein said semantic analysis module uses said danger estimate to configure its operation.

5. System comprising an emergency braking device (AEB) and a driver assistance device (DAC) according to the preceding claims, wherein the decision of said emergency braking assistance device is modulated by said danger estimate.

6. Driver assistance method for assisting with driving, on a roadway, a vehicle driven by a driver, comprising:

   - a step of receiving the streams of signals from a set of sensors (C1, C2, C3... Cn), a first subset of sensors providing a view of the situation surrounding said vehicle;
   - a semantic analysis step suited to detecting objects within said view and to classifying said detected objects;
   - a reaction analysis step of analysing the reactions of said driver and of said vehicle, on the basis of a second subset of sensors;
   - an interpretation step suited to matching, by means of a learning mechanism, the objects detected and classified by said semantic analysis step and data provided by said reaction analysis step in order to provide a danger estimate for said situation;
   - and a consequence interpretation step suited to providing a danger measurement based on signals originating from a third subset of sensors; said danger measurement being compared with said danger estimate in order to provide a signal configuring said learning mechanism implemented by said interpretation step.

7. Driver assistance method according to the preceding claim, comprising a step of alerting said driver when a danger estimate matches predefined criteria.

8. Driver assistance method according to one of Claims 6 and 7, wherein said learning mechanism is a semi-supervised mechanism.

9. Driver assistance method according to one of Claims 6 to 8, wherein said semantic analysis step uses said danger estimate to configure its operation.

10. Computer program comprising executable instructions for implementing the method according to one of Claims 6 to 9.

Fig. 1

Fig. 2

Fig. 3a

Fig. 3b

**EP 3 353 031 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8848978 B
- CN 102043953
- US 20030236605 A1

**Littérature non-brevet citée dans la description**

- Scale-space. **T. LINDEBERG.** Encyclopedia of Computer Science and Engineering. John Wiley and Sons, 2008, vol. IV, 2495-2504
- **CANNY, J.** A Computational Approach To Edge Detection. *IEEE Trans. Pattern Analysis and Machine Intelligence,* 1986, vol. 8, 6
- **J.-L. STARCK ; F. MURTAGH ; M. FADILI.** Sparse Image and Signal Processing. Cambridge University Press, 2010
- **MICHAEL ELAD ; MARIO A.T. FIGUEIREDO ; YI MA.** *On the Role of Sparse and Redundant Representations in Image Processing*
- **YINING DENG ; MANJUNATH, B.S. ; KENNEY, C. ; MOORE, M.S.** An efficient color representation for image retrieval. *Image Processing, IEEE Transactions on*
- **TAI SING LEE.** Image representation using 2D Gabor wavelets. *Pattern Analysis and Machine Intelligence, IEEE Transactions on,* vol. 18 (10